Europäisches Patentamt

European Patent Office

Office européen des brevets

(19)

(11) Numéro de publication : **0 661 896 A1**

## (12) DEMANDE DE BREVET EUROPEEN

(21) Numéro de dépôt : **94403032.9**

(22) Date de dépôt : **27.12.94**

(51) Int. Cl.$^6$ : **H04Q 7/36**

(30) Priorité : **30.12.93 FR 9315905**

(43) Date de publication de la demande :
**05.07.95 Bulletin 95/27**

(84) Etats contractants désignés :
**AT BE CH DE DK ES FR GB IT LI NL SE**

(71) Demandeur : **ALCATEL MOBILE
COMMUNICATION FRANCE
10, rue de la Baume
F-75008 Paris (FR)**

(72) Inventeur : **Dupuy, Pierre
14, Rue Lecluse
F-75017 Paris (FR)**

(74) Mandataire : **Renaud-Goud, Thierry et al
c/o SOSPI,
14-16, rue de la Baume
F-75008 Paris (FR)**

(54) **Dispositif d'allocation de ressources dans un réseau de radiocommunication cellulaire.**

(57) Le dispositif d'allocation de ressources s'applique dans un réseau de radiocommunication cellulaire comprenant une pluralité de cellules interférentes (A) qui partagent les mêmes ressources identifiées (TS1, ..., TS24).

Les cellules interférentes étant groupées en motifs de réutilisation comprenant chacun une cellule de référence (A1) et des cellules voisines (A2, A3, A4, A5, A6, A7), ce dispositif comprend des moyens pour répartir ces ressources identifiées dans des classes, et des moyens pour attribuer une de ces classes (TS1, TS2, TS3) comme classe de première priorité à une cellule unique (A1) de ce motif de réutilisation.

FIG.1

EP 0 661 896 A1

La présente invention concerne un dispositif d'allocation de ressources dans un réseau de radiocommunication cellulaire.

Plus précisément, elle s'applique dans des systèmes à accès multiple à répartition dans le temps. Dans un tel système, il est prévu plusieurs fréquences porteuses chacune supportant des trames répétitives subdivisées en intervalles de temps.

L'objet d'un réseau de radiocommunication est d'acheminer une communication entre une station de base et un terminal par voie radio au moyen d'un canal. Ainsi, un canal se voit affecter une ressource, dans le cas précis un intervalle de temps particulier d'une fréquence porteuse déterminée, pendant la durée de la communication.

On remarquera que pour une communication bidirectionnelle il faut prévoir deux canaux, l'un pour l'émission de la station de base, l'autre pour l'émission du terminal.

Dans les réseaux cellulaires, les stations de base et les terminaux ont une portée limitée, c'est-à-dire qu'au delà d'une certaine distance la communication n'est plus possible du fait de l'atténuation de la fréquence porteuse véhiculant la communication. On comprend alors qu'une même fréquence porteuse peut être utilisée à différents endroits, sous réserve que ces endroits soient suffisamment éloignés. Il est ainsi possible de découper un territoire en cellules, chaque cellule comprenant une station de base disposant d'une ou plusieurs fréquences porteuses. On assimilera dorénavant les termes de station de base et de cellule. Une solution bien connue donnée à titre d'exemple consiste à choisir des cellules hexagonales de même dimensions et adjacentes. Une cellule centrale est donc entourée de six cellules adjacentes avec chacune desquelles elle a un côté commun, toutes ces cellules définissant un motif.

Il apparaît clairement qu'il n'est pas souhaitable d'utiliser la même fréquence porteuse dans deux cellules adjacentes car cela donnerait lieu à de fortes interférences, notamment à la zone frontalière entre ces deux cellules. On a donc coutume de définir un plan de réutilisation de fréquence et on citera à titre d'exemple le motif à sept cellules déjà évoqué. Dans un tel motif, des fréquences porteuses différentes sont attribuées à chacune des sept cellules. Le motif est dupliqué par translation de sorte que les cellules voisines d'une cellule de référence qui sont les cellules les plus proches de celle-ci réutilisant les mêmes fréquences porteuses soient au nombre de six, régulièrement réparties sur un cercle dont le centre coïncide avec celui de la cellule de référence. On a donc défini un nouveau motif, un motif de réutilisation, motif qui comprend la cellule de référence et les cellules voisines. La structure du réseau cellulaire est ainsi parfaitement déterminée.

On considèrera maintenant le cas d'un réseau synchronisé c'est-à-dire d'un réseau dans lequel toutes les stations de base ont la même référence temporelle et émettent donc les trames en synchronisme.

Dans le cas qui nous préoccupe, le synchronisme ne doit pas être interprété de manière trop stricte, le point important étant que les intervalles de temps occupant la même positon dans des trames émises par une station de base et ses stations voisines se recouvrent de manière substantielle.

Ainsi, de manière générale, dans un réseau cellulaire, chaque station de base dispose de plusieurs ressources. Lorsqu'il faut allouer un nouveau canal suite à une demande de communication et sous réserve qu'il y ait plusieurs ressources disponibles, il faut en choisir une parmi celles-ci.

Une première solution consiste à dresser une liste de toutes les ressources, à identifier celles qui sont occupées et à sélectionner la première ressource disponible.

Cette solution qui semble la plus naturelle n'est pas optimisée quant à la réduction des interférences due à l'utilisation simultanée d'une même ressource dans deux cellules relativement proches.

C'est pour cette raison qu'une deuxième solution a déjà été proposée. Selon cette solution, une station de base mesure le niveau d'interférences dans chacune des ressources disponibles pour sélectionner celle qui présente le niveau le plus faible. Cependant, les conditions de propagation pouvant changer rapidement et la procédure de mesure étant relativement longue, l'état du réseau peut évoluer de manière significative entre le moment des mesures et celui de l'allocation de la ressource.

De plus, il faut que la station de base puisse procéder à ces mesures. Si c'est le cas pour les ressources destinées à l'émission des terminaux ou ressources montantes, ce n'est pas toujours le cas pour les ressources destinées à l'émission des stations de base ou ressources descendantes.

Il est en effet fréquent que les ressources montantes et les ressources descendantes utilisent deux bandes de fréquences porteuses différentes.

Les récepteurs des stations de base sont donc prévus pour la réception dans la bande des ressources montantes mais pas nécessairement dans celle des ressources descendantes. Dans ce cas, la mesure de niveau d'interférences est impossible.

La présente invention a ainsi pour but un dispositif d'allocation de ressources qui permet de réduire sensiblement les interférences lorsque le réseau n'est pas saturé, c'est-à-dire lorsque toutes les ressources ne sont pas utilisées. Ainsi le nombre de changements de ressource (procédure connue sous le nom de "handover") suite à une mauvaise qualité de la ressource allouée sera réduit. De plus la qualité moyenne des communications sera améliorée.

Le dispositif d'allocation de ressources s'applique dans un réseau de radiocommunication cellulaire, ce réseau comprenant une pluralité de cellules interférentes qui partagent les mêmes ressources identifiées, ces cellules interférentes étant groupées en motifs de réutilisation comprenant chacun une cellule de référence et des cellules voisines, et il comprend des moyens pour répartir ces ressources identifiées dans des classes, et des moyens pour attribuer une de ces classes comme classe de première priorité à une cellule unique de ce motif de réutilisation.

On garantit ainsi qu'une cellule et ses voisines n'utilisent pas les mêmes ressources tant que cela est possible, c'est-à-dire si le nombre de ressources allouées le permet.

Avantageusement, le dispositif comprend des moyens pour attribuer la classe de première priorité d'une de ces cellules comme classe de deuxième priorité à une autre cellule.

De plus, cette classe de première priorité comprenant plusieurs ressources, le dispositif comprend des moyens pour ordonner ces ressources selon un premier ordre de priorité dans cette classe.

D'autre part, le dispositif comprend des moyens pour ordonner ces ressources selon un deuxième ordre de priorité différent du premier ordre de priorité dans la classe de deuxième priorité de l'autre cellule.

En outre, le dispositif est ainsi agencé ce que le deuxième ordre de priorité corresponde à l'ordre inverse de celui du premier ordre de priorité.

De cette manière, lorsqu'il n'est plus possible de sélectionner une ressource dans la classe de première priorité, on adopte une règle de répartition des ressources qui tend à minimiser les interférences.

Selon une caractéristique additionnelle du dispositif, celui-ci comprend des moyens pour attribuer chacune des classes à une des cellules du motif de réutilisation avec un rang de priorité distinct, de sorte que chacune de ces classes n'ait jamais le même rang de priorité dans deux cellules distinctes.

On répartit ainsi les ressources selon un ordre différent dans chacune des cellules, ceci toujours dans le souci de diminuer les interférences.

De plus, les cellules en nombre n étant chacune pourvue d'un numéro d'identification distinct, le dispositif comprend des moyens pour affecter à la classe de numéro c dans la cellule de numéro d'identification ID une priorité dont le rang est égal à la différence de ce numéro de classe c et du numéro d'identification ID modulo le nombre de cellules, le tout augmenté d'une unité ((c-ID)modulo n + 1).

D'autre part, une de ces classes comprenant plusieurs ressources, le dispositif comprend des moyens pour ordonner ces ressources selon un premier ordre de priorité ou selon un deuxième ordre de priorité différent du premier ordre de priorité.

Ainsi, le dispositif comprend des moyens pour affecter cette classe du premier ordre de priorité lorsque cette classe présente un rang de priorité impair et pour l'affecter du deuxième ordre de priorité lorsque cette classe présente un rang de priorité pair.

En outre, le deuxième ordre de priorité correspond à l'ordre inverse de celui du premier ordre de priorité.

Une solution préférentielle pour la répartition des ressources s'applique lorsque les cellules voisines sont au nombre de n-1 et les ressources identifiées sont au nombre de q; alors le dispositif comprend des moyens pour établir un identificateur $k(c)$ associé à la classe de numéro c, cet identificateur $k(c)$ valant la partie entière du produit du nombre de ressources q et du numéro de cette classe diminué d'une unité (c-1) divisé par le nombre de cellules n, le tout augmenté d'une unité : $k(c)=E(q.(c-1)/n)+1$, les moyens pour répartir les ressources étant ainsi agencés que la classe de numéro c comprend $[k(c+1)-k(c)]$ ressources pour c inférieur à n et que la classe n comprend $[q+1-k(n)]$ ressources.

Dans une première application du dispositif à un réseau de radiocommunication fonctionnant selon l'accès multiple par répartition dans le temps, il comprend des moyens pour ordonner les ressources identifiées selon une numérotation à prépondérance fréquentielle, les classes comprenant des ressources de numéros consécutifs.

On concentre ainsi, dans la plupart des cas, l'ensemble des ressources d'une classe sur une seule fréquence porteuse.

Cette application est particulièrement avantageuse lorsque le réseau de radiocommunication fonctionne sans saut de fréquence ou bien lorsqu'il fonctionne avec une synchronisation horaire et avec un saut de fréquence cyclique.

Dans une deuxième application du dispositif à un réseau de radiocommunication fonctionnant selon l'accès multiple par répartition dans le temps, il comprend des moyens pour ordonner les ressources identifiées selon une numérotation à prépondérance temporelle, les classes comprenant des ressources de numéros consécutifs.

On répartit ainsi l'ensemble des ressources d'une classe sur plusieurs fréquences porteuses.

Cette application est particulièrement avantageuse lorsque le réseau de radiocommunication fonctionne avec un saut de fréquence pseudo-aléatoire ou bien lorsqu'il fonctionne sans synchronisation horaire et avec un saut de fréquence cyclique.

Dans une troisième application du dispositif à un réseau de radiocommunication fonctionnant selon l'accès multiple par répartition dans le temps,
- les cellules voisines étant au nombre de n-1,
- les ressources étant formées à partir de fréquences porteuses en nombre f identifiées chacune par son rang j dans l'ensemble des fréquences porteuses,
- chacune de ces fréquences porteuses étant formée de trames comportant des intervalles de temps en nombre p identifiés chacun par son rang i dans une trame,

- un secteur de temps qui correspond au iième intervalle de temps de la jième fréquence porteuse étant alors identifié par son rang qui vaut $(j-1).p + i$,
- chacune des classes étant affectée d'un numéro distinct c compris entre 1 et n,
- un facteur de répétition R valant la partie entière du nombre des secteurs de temps divisé par le nombre des cellules : $R = E(f.p/n)$,

le dispositif est ainsi agencé que si le numéro c d'une des classes est inférieur ou égal à f.p, il attribue à cette classe les secteurs de temps dont le rang vaut c + k.n où k est un nombre entier compris entre 0 et R sous réserve que ce rang soit inférieur ou égal à f.p.

Quelle que soit celle des trois précédentes applications envisagées, les classes de priorité d'une cellule étant épuisées, le dispositif attribue pour un canal de cette cellule un intervalle de temps de rang i de sorte que, dans cette cellule, le nombre total des intervalles de temps de rang i attribués n'excède pas de plus d'une unité le nombre total des intervalles de temps de rang i' déjà attribués, quel que soit i' différent de i.

Il s'agit là d'une solution alternative.

Naturellement, si le réseau de radiocommunication fonctionne selon l'accès multiple par répartition dans les fréquences, les ressources identifiées sont des fréquences distinctes.

De même, si le réseau de radiocommunication fonctionne selon l'accès multiple par répartition dans les codes, les ressources identifiées sont des codes distincts.

La présente invention apparaîtra maintenant de manière plus précise dans le cadre de la description qui suit en référence aux figures annexées qui représentent :

- la figure 1, une représentation d'un exemple de réseau cellulaire,
- la figure 2, un diagramme d'un exemple des ressources partagées par plusieurs cellules,
- la figure 3, un exemple d'allocation de ressources selon un premier mode de réalisation du dispositif de l'invention,
- la figure 4, un exemple d'allocation de ressources selon un deuxième mode de réalisation du dispositif de l'invention.

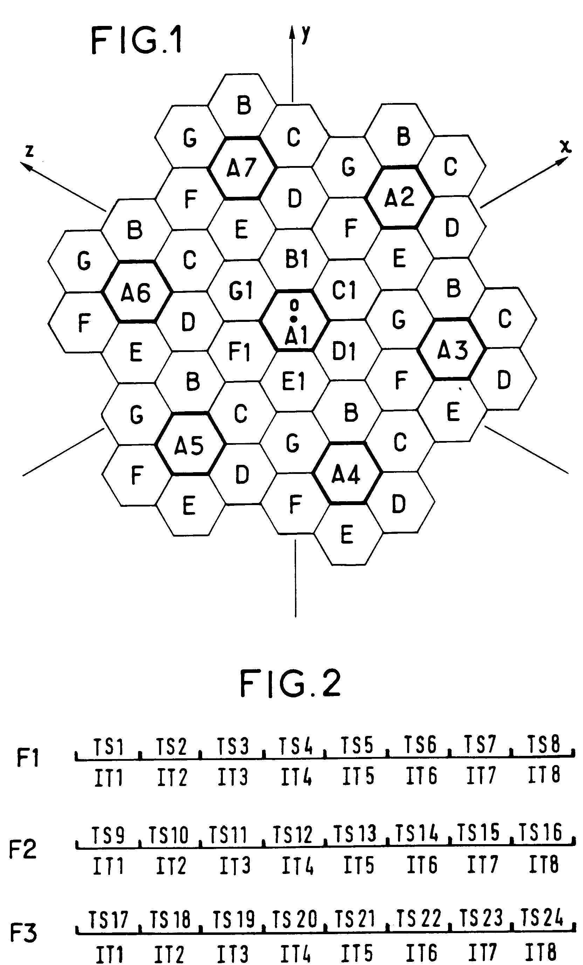

L'invention s'applique quelle que soit la structure du réseau cellulaire, cependant on s'appuiera sur le motif à sept cellules hexagonales représenté dans la figure 1 pour clarifier l'exposé qui, sans cela, resterait théorique.

Ce réseau comprend un motif central formé d'une cellule de référence A1 entourée par six cellules adjacentes B1, C1, D1, E1, F1, G1. On peut dès lors définir un repère d'axe Oxy comme suit :

- l'origine O de ce repère coïncide avec le centre de la cellule de référence A1,
- l'axe Ox passe par le centre d'une cellule adjacente C1,
- l'axe Oy passe par le centre d'une autre cellule adjacente B1 de sorte que l'angle xOy vaille 60°,
- l'unité de longueur dans ce repère vaut la distance qui sépare le centre de la cellule de référence et le centre de l'une quelconque des cellules adjacentes.

Le motif central est dupliqué par translation de la cellule de référence dans le repère Oxy vers les 6 coordonnées suivantes :

- (2, 1) pour obtenir la cellule A2,
- (3, -2) pour obtenir la cellule A3,
- (1, -3) pour obtenir la cellule A4,
- (-2, -1) pour obtenir la cellule A5,
- (-3, 2) pour obtenir la cellule A6,
- (-1, 3) pour obtenir la cellule A7.

On définit ainsi une maille formée de sept motifs centraux qui est intégralement représentée dans la figure 1.

En choisissant un nouvel axe Oz tel que Oy forme la bissectrice des axes Ox et Oz, on peut alors dupliquer cette maille par translation selon l'un quelconque des axes Ox, Oy, Oz, d'un multiple de sept unités de longueur afin de couvrir le territoire affecté au réseau de radiocommunication.

Par hypothèse, les sept cellules du motif central sont chacune pourvues d'une ou plusieurs fréquences porteuses différentes.

Il apparaît maintenant que les cellules les plus proches de la cellule de référence A1 qui utilisent la ou les mêmes fréquences porteuses que celle-ci sont au nombre de 6, régulièrement disposées sur un cercle dont le centre coïncide avec celui O de cette cellule de référence A1. Ces six cellules seront nommées cellules voisines A2, A3, A4, A5, A6, A7 car ce sont elles qui vont produire le plus d'interférences au niveau de la cellule de référence A1, du fait de leur proximité.

Les sept cellules précédentes forment un motif de réutilisation. Selon l'invention, chacune d'entre elles se voit attribuer un numéro d'identification ID distinct : le numéro 1 pour la cellule de référence A1 et les numéros 2, 3, 4, 5, 6, 7 respectivement pour les cellules voisines A2, A3, A4, A5, A6, A7.

Il va sans dire que dans le cas d'un réseau étendu comprenant une pluralité de mailles ou de fractions de mailles, la solution naturelle consiste à attribuer le même numéro d'identification aux cellules qui ont les mêmes coordonnées dans chacune des mailles.

Si l'on considère le système GSM, cette solution peut être aisément implémentée. En effet, il est prévu que chaque station de base soit affectée d'un code d'identité BSIC (pour le terme anglais "Base Station Identity Code"), ce code d'identité comprenant notamment un code de couleur BCC (pour le terme anglais "Base station Colour Code"). On rappelle ici que ces stations utilisent les mêmes fréquences, notamment en ce qui concerne les canaux de signalisation, et qu'il convient donc de prévoir un moyen pour les distinguer. Dans cette intention, les stations de base qui correspondent aux sept cellules d'un motif de réutilisation ont chacune un code de couleur différent de sorte qu'un terminal puisse déterminer avec laquelle d'entre elles il est en relation. Dès lors, il suffit de prévoir une table de correspondance entre les codes de couleur BCC et les numéros d'identification ID. On remarquera de plus que si le code de couleur est codé sur trois bits, ce qui donne huit possibilités, il suffit d'en conserver sept, et dans ce cas, on peut décider que le numéro d'identification ID est égal au code de couleur BCC.

Par ailleurs, l'invention s'applique aux systèmes dits à accès multiple par répartition dans le temps et on prendra encore pour exemple le système GSM dans lequel les trames comportent huit intervalles de temps. De plus, l'invention s'applique dans un réseau synchronisé c'est-à-dire lorsque les sept cellules en cause émettent des trames en synchronisme, le premier intervalle de temps, par exemple, étant émis simultanément par ces cellules.

On supposera dans un premier temps que chacune des cellules dispose d'une seule fréquence porteuse, ce qui définit 8 ressources par cellule, une par intervalle de temps.

Lorsqu'une cellule doit attribuer un canal, suite à une demande de communication par exemple, elle alloue par priorité à ce canal l'intervalle de temps dont le rang dans la trame est égal à la valeur de son numéro d'identification.

En cas de communication bidirectionnelle cette allocation préférentielle peut se faire aussi bien pour les canaux montants que pour les canaux descendants.

Ainsi lorsqu'un canal au maximum est attribué par chacune des sept cellules, on garantit qu'il n'y a pas d'interférences entre elles puisqu'elles utilisent toutes des intervalles de temps distincts.

Il apparaît immédiatement que l'invention présente un intérêt même si le réseau n'est pas parfaitement synchronisé.

En effet si les intervalles de temps de même rang émis par des cellules voisines se recouvrent ne serait-ce que partiellement, on assiste à une réduction des interférences même si elle est moins importante que dans le cas d'une synchronisation parfaite.

On peut examiner maintenant le cas où chacune des cellules disposent toujours d'une seule fréquence porteuse mais où la trame comporte 16 intervalles de temps et non pas 8.

Conformément aux dispositions ci-dessus, les sept premiers intervalles de temps sont alloués par priorité aux cellules concernées et il convient de se préoccuper des 9 restants.

Par analogie, la cellule de référence A1 aura priorité sur l'intervalle de temps numéro 8, et les cellules A2, A3, A4, A5, A6, A7 auront priorité respectivement sur les intervalles de temps numéros 9, 10, 11, 12, 13, 14.

On définit ainsi des classes de première priorité affectées chacune à une cellule distincte. Lorsqu'une cellule doit attribuer un canal, suite à une demande de communication par exemple, elle alloue par priorité à ce canal un intervalle de temps figurant dans sa classe de première priorité. Dans le cas présent, les classes de première priorité des cellules A1, A2, A3, A4, A5, A6, A7 comprennent respectivement les intervalles de temps 1 et 8, 2 et 9, 3 et 10, 4 et 11, 5 et 12, 6 et 13, 7 et 14.

Il reste cependant deux intervalles de temps à affecter. On peut choisir de les laisser sans affectation prioritaire ou bien, par exemple, d'affecter les intervalles de temps numéro 15 et 16 aux classes de première priorité respectivement de la cellule de référence A1 et de la cellule voisine A2.

Selon une première option, les intervalles de temps d'une même classe de première priorité auront un niveau de priorité équivalent au sein de cette classe. A titre d'exemple, si les intervalles de temps numéros 1 et 8 sont libres, la cellule de référence pourra choisir indifféremment l'un ou l'autre pour l'attribuer à un canal.

Selon une deuxième option, les intervalles de temps d'une même classe de première priorité sont classés suivant un ordre de première priorité au sein de cette classe. A titre d'exemple, la cellule de référence attribuera en premier lieu l'intervalle de temps numéro 1, ensuite, l'intervalle de temps numéro 8, puis, éventuellement, l'intervalle de temps numéro 15.

On définit maintenant des classes de deuxième priorité affectées chacune à une cellule distincte. Lorsqu'une cellule doit attribuer un canal et qu'il n'y a plus de ressources libres dans sa classe de première priorité, elle alloue à ce canal un intervalle de temps figurant dans sa classe de deuxième priorité.

De manière avantageuse, la classe de deuxième priorité d'une cellule de numéro d'identification ID correspond à la classe de première priorité de la cellule de numéro d'identification immédiatement supérieur ID+1.

Ainsi, à titre d'exemple, la classe de deuxième priorité de la cellule de référence A1 comprend les deux intervalles de temps de la classe de première priorité de la cellule voisine A2, à savoir ceux qui portent les numéros 2 et 9.

Si l'ordre de première priorité au sein de la classe de première priorité correspond à l'ordre croissant, une solution particulièrement efficace consiste à classer les intervalles de temps concernés dans l'ordre décroissant dans la classe de deuxième priorité.

En effet, si la cellule A2 a besoin d'un seul canal, elle retiendra l'intervalle de temps numéro 2. La cellule de référence A1, quand elle aura épuisé sa classe de première premiére priorité, retiendra l'intervalle de temps numéro 9 figurant en premier lieu dans sa classe de deuxième priorité pour le prochain canal à attribuer. On s'aperçoit que dans ce cas il n'y a pas d'interférence entre les deux cellules en cause alors que si l'intervalle de temps numéro 2 apparaissait au premier rang dans les classes de première respectivement de deuxième priorité de la cellule A2 et de la cellule de référence A1, ces cellules auraient toutes deux sélectionné cet intervalle de temps.

On ajoutera par ailleurs que l'invention ne s'applique pas seulement dans le cas d'un motif à sept cellules. On citera par exemple le motif à neuf cellules également connu. Quelle que soit la structure du réseau, il est toujours possible d'identifier les cellules voisines d'une cellule de référence : ce sont les cellules les plus proches de la cellule de référence, situés approximativement à la même distance de celle-ci et qui emploient la ou les mêmes fréquences porteuses.

De même, l'invention trouve également application lorsqu'une cellule de référence et des cellules voisines utilisent plusieurs fréquences porteuses communes, ce qui est relativement courant.

A titre d'exemple et en référence à la figure 2, les cellules concernées disposent chacune d'une première, d'une deuxième et d'une troisième fréquence porteuse F1, F2, F3 dont les trames comprennent huit intervalles de temps IT1, ..., IT8. On peut ainsi définir des secteurs de temps TS qui correspondent chacun à un intervalle de temps distinct d'une fréquence porteuse déterminée :

- les secteurs de temps TS1 à TS8 correspondent respectivement aux intervalles de temps IT1 à IT8 de la première fréquence porteuse F1,
- les secteurs de temps TS9 à TS16 correspondent respectivement aux intervalles de temps IT1 à IT8 de la deuxième fréquence F2,
- les secteurs de temps TS17 à TS24 correspondent respectivement aux intervalles de temps IT1 à IT8 de la troisième fréquence porteuse F3.

Chaque secteur de temps est susceptible de recevoir un canal et on peut aisément transposer le mode de réalisation à une fréquence porteuse déjà présenté dans celui à plusieurs fréquences porteuses en prenant comme ressource un secteur de temps au lieu d'un intervalle de temps.

Il convient donc maintenant de décrire le dispositif d'allocation de ressources pour un cas d'application quelconque en adoptant les notations suivantes :

- la cellule de référence A1 est entourée de (n-1) cellules voisines, ce qui donne n cellules au total,
- la trame est formée de p intervalles de temps disjoints,

- les n cellules partagent f fréquences porteuses,
- un facteur de répétition R vaut la partie entière du nombre de secteurs de temps divisé par le nombre total de cellules : R = E(f.p/n).

On se propose de classer les ressources en classes c où c est compris entre 1 et n. Le nombre de classes est égal au nombre de cellules.

On définit un identificateur k(c) de la classe c comme la partie entière du produit du nombre de fréquences f, du nombre d'intervalles de temps par trame p et du numéro de la classe diminué d'une unité (c-1) divisé par le nombre de cellules n, le tout augmenté d'une unité :

$$k(c) = E(f.p.(c - 1)/n) + 1$$

Ainsi, la classe c comprend les ressources dont le numéro est supérieur ou égal à k(c) et inférieur à k(c+1), la dernière classe comprenant les ressources s'étendant entre k(n) et f.p. En fait, le point important ici n'est pas tant de savoir quelles ressources figurent dans quelles classes mais plutôt de connaître le nombre de ressources dans chacune des classes.

Ce mode de classement donné à titre d'exemple présente les avantages suivants.

Il s'applique quelle que soit la valeur des différents paramètres, notamment si le nombre de ressources est inférieur au nombre de cellules.

Les ressources sont uniformément réparties. Le nombre de ressources ne peut différer de plus d'une unité entre deux classes quelconques, il vaut R ou R+1.

Selon l'invention, la classe de première priorité de la cellule de numéro d'identification ID est la classe de ressource identifiée par ce même numéro.

De plus, la classe de deuxiéme priorité de la cellule de numéro d'identification ID est la classe de ressource identifiée par ce numéro augmenté d'une unité, soit ID+1.

En outre, on peut définir pour chaque cellule une classe de priorité de rang r, r étant compris entre 1 et n. Une cellule sélectionne une ressource dans sa classe de rième priorité lorsque toutes les ressources des classes de priorité de rang inférieur à r ont été déjà attribuées. Avantageusement, la cellule de numéro d'identification ID affecte à la classe c une priorité dont le rang est égal à ((c-ID)modulo n)+1.

Naturellement, il est toujours souhaitable de classer les ressources d'une même classe dans un ordre différent selon que cette classe est une classe de première ou de deuxième priorité. On a déjà mentionné qu'il est judicieux de choisir pour l'ordre de deuxième priorité l'ordre inverse de celui de première priorité. En généralisant, on peut choisir un classement déterminé des ressources d'une classe lorsque cette classe présente un rang de priorité impair et adopter le classement inverse lorsque cette classe présente un rang de priorité pair.

La répartition des ressources en classes étant présentée, il convient maintenant de décider du numéro qu'il faut attribuer à chacune des ressources. Cette opération qui sera dénommée la numérotation des ressources peut se faire de différentes manières.

Selon une premiére numérotation, la numérotation à prépondérance fréquentielle, on commence par tous les intervalles de temps de la première fréquence porteuse F1, puis on prend tous les intervalles de temps de la deuxième fréquence porteuse F2 et on termine par tous les intervalles de temps de la troisième fréquence porteuse F3, afin de minimiser le nombre de fréquences apparaissant dans une même classe. C'est la solution qui a été retenue auparavant.

A titre d'exemple, on attribue à une ressource le numéro du secteur de temps correspondant. La première classe (c=1) comprend les secteurs de temps TS1, TS2 et TS3 alors que la deuxième classe (c=2) comprend les secteurs de temps TS4, TS5 et TS6.

La première classe (c=1), lorsqu'elle est affectée de l'ordre de première priorité qui est l'ordre croissant des secteurs de temps : TS1-TS2-TS3, constitue la classe de première priorité de la cellule de numéro d'identification ID égal à 1, tandis que lorsqu'elle est affectée de l'ordre de deuxième priorité qui est l'ordre décroissant : TS3-TS2-TS1, elle constitue la classe de deuxième priorité de la cellule de numéro d'identification ID égal à 7.

La deuxième classe (c=2), lorsqu'elle est affectée de l'ordre de première priorité qui est l'ordre croissant des secteurs de temps : TS4-TS5-TS6, constitue la classe de première priorité de la cellule de numéro d'identification ID égal à 2, tandis que lorsqu'elle est affectée de l'ordre de deuxième priorité qui est l'ordre décroissant : TS6-TS5-TS4, elle constitue la classe de deuxième priorité de la cellule de numéro d'identification ID égal à 1.

On peut ainsi construire l'ensemble des sept classes et procéder au classement des ressources dans ces classes afin d'identifier pour chaque cellule ses classes de priorité de rang r pour tout r compris entre 1 et 7. Le résultat en est pour chaque cellule une liste de 24 secteurs de temps selon laquelle cette cellule doit attribuer les canaux.

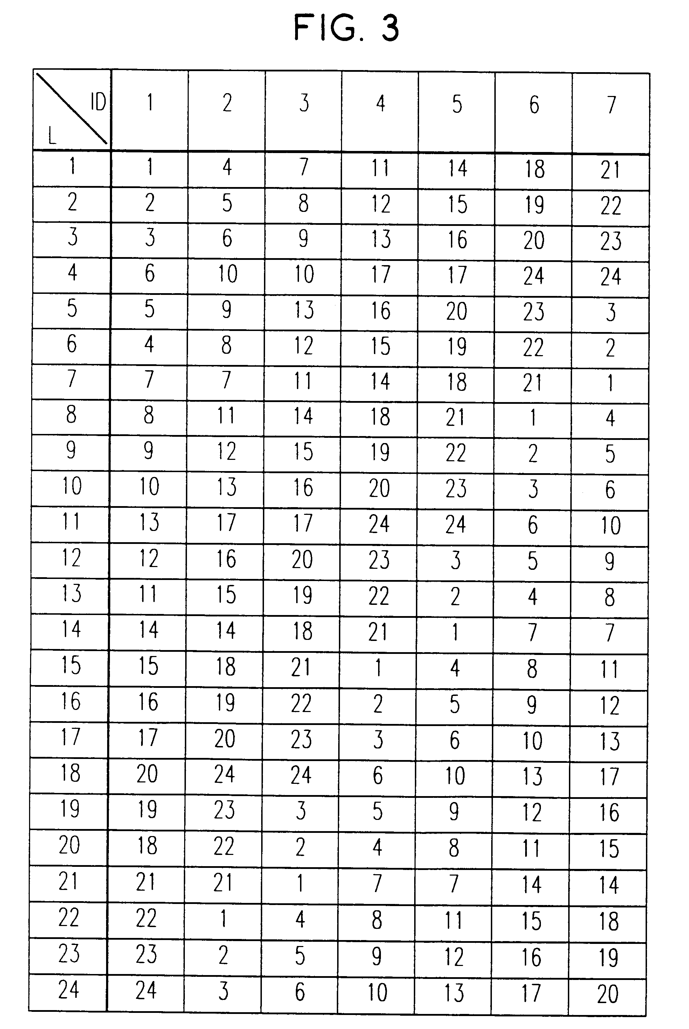

La figure 3 représente ainsi un tableau qui indique le numéro du secteur de temps qui figure à la position L dans la liste de la cellule de numéro d'identification ID.

Selon une deuxième numérotation, la numérotation à prépondérance temporelle, on commence par tous les intervalles de temps de même rang (IT1 par exemple) pour chacune des fréquences porteuses, puis on prend tous les intervalles de temps d'un autre rang (IT2 par exemple) pour chacune des fréquences porteuses et ainsi de suite pour tous les rangs d'intervalle de temps, afin de répartir le mieux possible les différentes fréquences dans les différentes classes.

On propose l'exemple suivant. La première classe (c=1) comprend les secteurs de temps TS1, TS9 et TS17 alors que la deuxième classe (c=2) comprend les secteurs de temps TS2, TS10 et TS18.

La premiére classe (c=1), lorsqu'elle est affectée de l'ordre de première priorité qui est l'ordre croissant des secteurs de temps : TS1-TS9-TS17, constitue la classe de première priorité de la cellule de numéro d'identification ID égal à 1, tandis que lorsqu'elle est affectée de l'ordre de deuxième priorité qui est l'ordre décroissant : TS17-TS9-TS1, elle constitue la classe de deuxième priorité de la cellule de numéro d'identification ID égal à 7.

La deuxième classe (c=2), lorsqu'elle est affectée de l'ordre de première priorité qui est l'ordre croissant des secteurs de temps : TS2-TS10-TS18, constitue la classe de première priorité de la cellule de numéro d'identification ID égal à 2, tandis que lorsqu'elle est affectée de l'ordre de deuxième priorité qui est l'ordre décroissant : TS18-TS10-TS2, elle constitue la classe de deuxième priorité de la cellule de numéro d'identification ID égal à 1.

On peut ainsi construire l'ensemble des sept classes et procéder au classement des ressources dans ces classes afin d'identifier pour chaque cellule ses classes de priorité de rang r pour tout r compris entre 1 et 7. Le résultat en est pour chaque cellule une liste de 24 secteurs de temps selon laquelle cette cellule doit attribuer les canaux.

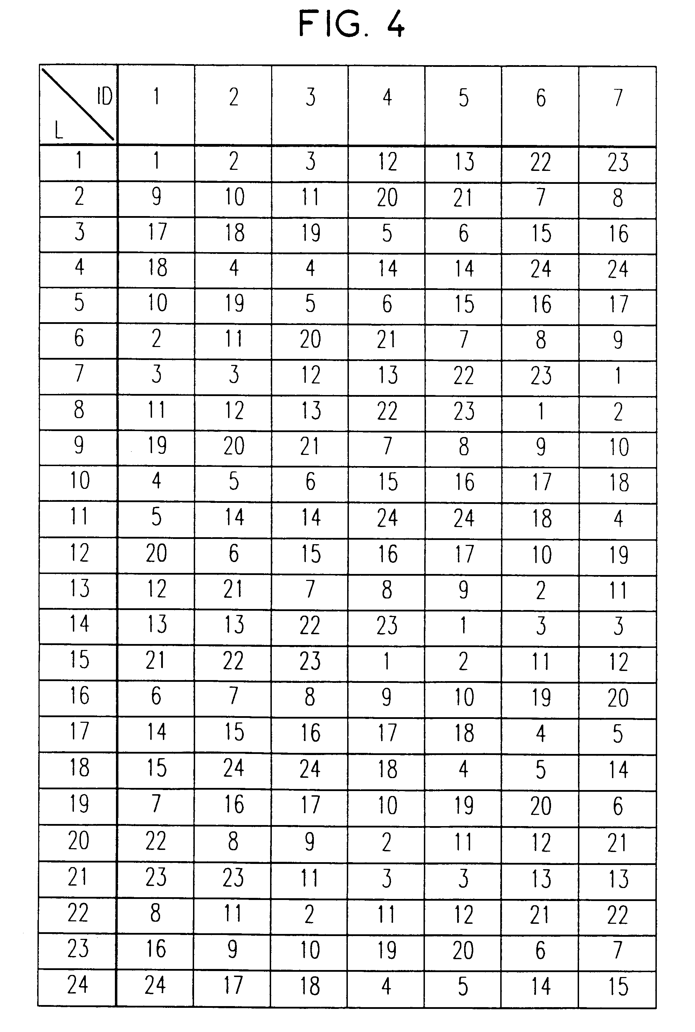

La figure 4 représente ainsi un tableau qui indique le numéro du secteur de temps qui figure à la position L dans la liste de la cellule de numéro d'identification ID.

On peut naturellement envisager bien d'autres systèmes de numérotation. A titre d'exemple, une solution triviale consiste à placer la première ressource dans la première classe, puis la seconde ressource dans la seconde classe et ainsi de suite jusqu'à la nième ressource dans la nième classe. On continue en plaçant la ressource suivante, la (n+1)ième, dans la première classe, puis la (n+2)ième dans la seconde classe et ainsi de suite jusqu'à épuisement des ressources.

Ainsi la premiére classe se verra attribuer les secteurs de temps TS1, TS8, TS15, la deuxième classe se verra attribuer les secteurs de temps TS2, TS9, TS16, et ainsi de suite pour les autres classes.

La question peut se poser quant à l'affectation des 3 secteurs de temps TS22, TS23, TS24. On peut choisir de les laisser sans affectation, ou bien par exemple, d'affecter le secteur de temps TS22 à la première classe, le secteur TS23 à la deuxième classe et le secteur TS24 à la troisième classe.

Pour généraliser, on adopte les conventions suivantes:

- la trame est formée d'intervalles de temps disjoints chacun identifié par sa position i dans la trame où i est compris entre 1 et p,
- les fréquences porteuses au nombre de f sont identifiées par leur rang j dans l'ensemble de ces fréquences,

- le secteur de temps qui correspond au iième intervalle de temps de la jième fréquences porteuse est identifié par son rang qui vaut (j-1).p + i,

Chacune des n classes est affectée d'un numéro c distinct compris entre 1 et n et, si ce numéro est inférieur ou égal à f.p, elle comprend les secteurs de temps dont le rang vaut c + k.n si cette valeur est elle-même inférieure à f.p, pour tout k compris entre O et le facteur de répétition R.

Les différents types de numérotation présentent chacun leurs avantages propres et l'on va donc examiner lequel il convient de choisir en fonction du système de gestion de fréquences adopté.

Lorsqu'il n'y a pas de saut de fréquence, chaque canal demeure sur l'intervalle de temps déterminé de la fréquence porteuse déterminée qui lui a été assigné. C'est le cas qui a été considéré jusqu'à présent. Dans ce cas, on préfera la numérotation à prépondérance fréquentielle. En minimisant le nombre de fois où chaque fréquence porteuse change de cellule, on minimise les risques de recouvrement partiel d'intervalles de temps entre les cellules, notamment lorsque les cellules ne sont pas parfaitement synchronisées.

Lorsqu'il y a saut de fréquence, l'ensemble des intervalles de temps qui figurent sur une fréquence porteuse déterminée lors d'une trame de référence change de fréquence au rythme des trames. Tout se passe comme si cette porteuse faisait un saut de fréquence à chaque trame en suivant une loi de saut de fréquence. Ainsi, les intervalles de temps IT1 à IT8 qui sont sur la fréquence porteuse F1 lors de la trame de référence passent sur la fréquence F1' la trame suivante, puis sur la fréquence F1" la trame d'après et ainsi de suite.

On distingue deux types de saut fréquence, le saut de fréquence pseudo-aléatoire et le saut de fréquence cyclique selon que la loi de saut de fréquence présente un caractère pseudo-aléatoire ou bien périodique.

Dans le cas d'un saut de fréquence pseudo-aléatoire, il est souhaitable d'adopter la numérotation à prépondérance temporelle de sorte que les risques d'interférence soient répartis statistiquement de manière uniforme sur toutes les cellules.

Dans le cas d'un saut de fréquence cyclique, il est souhaitable d'adopter la numérotation à prépondérance fréquentielle si toutes les cellules ont la même synchronisation horaire, c'est-à-dire si les ressources correspondantes dans deux cellules quelconques figurent au même moment sur la même fréquence. En effet, vis-à-vis des interférences, tout se passe comme s'il n'y avait pas de saut de fréquence.

Par contre, si la synchronisation horaire n'est pas la même dans toutes les cellules, il est préférable d'adopter la numérotation à prépondérance temporelle. Dans ce cas, les ressources correspondantes dans deux cellules quelconques changent bien de fréquence au même moment, mais il n'est pas possible de connaître ces fréquences. Cet aléa est comparable à celui qui est apporté par le saut de fréquence pseudo-aléatoire.

L'invention présente donc un moyen d'attribuer des ressources par priorité à une cellule.

Elle peut être mise en oeuvre pour définir uniquement les classes de première priorité et dans ce cas il peut arriver qu'une cellule n'ait pas de classe de première priorité, si le nombre de ressources est inférieur au nombre de cellules, par exemple.

Elle peut également être mise en oeuvre pour définir les classes de première et de deuxième priorité.

En tout état de cause, on peut utiliser le dispositif précédemment décrit dans une forme restreinte de sorte qu'il reste des canaux qui ne figurent dans aucune des classes de priorité pour une cellule donnée. Lorsqu'une telle cellule a épuisé les ressources de ses différentes classes de priorité et qu'il lui faut un nouveau canal, il s'agit de savoir quelle ressource choisir.

Outre les méthodes déjà connues, une solution avantageuse consiste à affecter les canaux de cette cellule de sorte qu'ils soient approximativement répartis sur tous les intervalles de temps. Ainsi lorsque cette cellule pourvue de plusieurs fréquences porteuses doit attribuer un nouveau canal, elle choisit un intervalle de temps de rang i afin que le nombre total des intervalles de temps de rang i qu'elle a ainsi attribués n'excède pas de plus d'une unité le nombre total des intervalles de temps de rang i' déjà attribués par elle, quel que soit i' différent de i.

L'invention a été décrite en référence aux systèmes fonctionnant selon l'accès multiple par répartition dans le temps. Elle s'apllique naturellement dans d'autres systèmes. On pense en particulier aux systèmes à accès multiple par répartition dans les fréquences où chaque ressource est une fréquence distincte, ou bien aux systèmes à accès multiple par répartition dans les codes où chaque ressource est un code distinct.

Pour terminer, on précisera que le dispositif de l'invention peut être localisé à différents endroits dans le réseau de radiocommunication cellulaire. Dans le cas du GSM, il est prévu un organe de commande des stations de base, le contrôleur de station de base, qui a notamment la charge de l'allocation des ressources. Le dispositif prendra donc naturellement place dans ce contrôleur.

Cependant, l'homme du métier aperçoit immédiatement que l'on peut prévoir un dispositif dans chacune des stations de base. Il suffit en effet que le dispositif ait accès au numéro d'identification de la cellule, aux ressources disponibles, au système de numérotation des ressources ainsi qu'à la loi de répartition des ressources dans les classes. Il va sans dire que les différentes station de base doivent adopter les mêmes règles.

En fait, le dispositif comprend deux organes essentiels, un organe de répartition des ressources dans les classes et un organe d'attribution d'un rang de priorité à ces classes.

Les deux organes peuvent donc être agencés dans le contrôleur de station de base ou bien dans chacune des stations de base. On peut également prévoir un organe de répartition commun dans le contrôleur et un organe d'attribution de priorité dans chacune des stations de base.

## Revendications

1) Dispositif d'allocation de ressources dans un réseau de radiocommunication cellulaire, ce réseau comprenant une pluralité de cellules interférentes (A) qui partagent les mêmes ressources identifiées (TS1, ..., TS24), caractérisé en ce que, lesdites cellules interférentes étant groupées en motifs de réutilisation comprenant chacun une cellule de référence (A1) et des cellules voisines (A2, A3, A4, A5, A6, A7), il comprend des moyens pour répartir lesdites ressources identifiées dans des classes, et des moyens pour attribuer une desdites classes (TS1, TS2, TS3) comme classe de première priorité à une cellule unique (A1) de ce motif de réutilisation.

2) Dispositif selon la revendication 1, caractérisé en ce qu'il comprend des moyens pour attribuer la classe de première priorité (TS1, TS2, TS3) d'une desdites cellules (A1) comme classe de deuxième priorité à une autre cellule (A7).

3) Dispositif selon la revendication 2 caractérisé en ce que, ladite classe de première priorité comprenant plusieurs ressources (TS1, TS2, TS3), il comprend des moyens pour ordonner ces ressources selon un premier ordre de priorité (TS1-TS2-TS3) dans cette classe.

4) Dispositif selon la revendication 3, caractérisé en ce qu'il comprend des moyens pour ordonner lesdites ressources (TS1, TS2, TS3) selon un deuxième ordre de priorité (TS3-TS2-TS1) différent dudit premier ordre de priorité dans ladite classe de deuxième priorité de l'autre cellule (A7).

5) Dispositif selon la revendication 4, caractérisé en ce que ledit deuxième ordre de priorité correspond à l'ordre inverse de celui dudit premier ordre de priorité.

6) Dispositif selon la revendication 1, caractérisé en ce qu'il comprend des moyens pour attribuer chacune desdites classes à une des cellules (A1) dudit motif de réutilisation avec un rang de priorité distinct, de sorte que chacune desdites classes n'ait jamais le même rang de priorité dans deux cellules distinctes.

7) Dispositif selon la revendication 6 caractérisé en ce que, lesdites cellules en nombre n étant chacune pourvue d'un numéro d'identification distinct, il comprend des moyens pour affecter à la classe de numéro c dans la cellule de numéro d'identification ID une priorité dont le rang est égal à la différence dudit numéro de classe c et dudit numéro d'identification ID modulo le nombre de cellules n, le tout augmenté d'une unité ((c-ID)modulo n + 1).

8) Dispositif selon l'une quelconque des revendications 6 ou 7 caractérisé en ce que, une desdites classes comprenant plusieurs ressources (TS1, TS2, TS3), il comprend des moyens pour ordonner ces ressources selon un premier ordre de priorité (TS1-TS2-TS3) ou selon un deuxième ordre de priorité (TS3-TS2-TS1) différent dudit premier ordre de priorité.

9) Dispositif selon la revendication 8, caractérisé en ce qu'il comprend des moyens pour affecter ladite classe dudit premier ordre de priorité (TS1-TS2-TS3) lorsque cette classe présente un rang de priorité impair et pour l'affecter dudit deuxième ordre de priorité (TS3-TS2-TS1) lorsque cette classe présente un rang de priorité pair.

10) Dispositif selon la revendication 9, caractérisé en ce que ledit deuxième ordre de priorité correspond à l'ordre inverse de celui dudit premier ordre de priorité.

11) Dispositif selon la revendication 1 caractérisé en ce que,
- lesdites cellules voisines (A2, ..., A7) étant au nombre de n-1,
- lesdites ressources identifiées (TS1, ..., TS24) étant au nombre de q,
- il comprend des moyens pour établir un identificateur $k(c)$ associé à la classe de numéro c, cet identificateur $k(c)$ valant la partie entière du produit du nombre de ressources q et dudit numéro de cette classe diminué d'une unité (c-1) divisé par le nombre de cellules n, le tout augmenté d'une unité : $k(c)=E(q.(c-1)/n)+1$,
- les moyens pour répartir les ressources sont ainsi agencés que la classe de numéro c comprend $[k(c+1)-k(c)]$ ressources pour c inférieur à n et que la classe n comprend $[q+1-k(n)]$ ressources.

12) Dispositif selon la revendication 1 caractérisé en ce que, ledit réseau de radiocommunication fonctionnant selon l'accès multiple par répartition dans le temps, il comprend des moyens pour ordonner lesdites ressources identifiées selon une numérotation à prépondérance fréquentielle, lesdites classes comprenant des ressources de numéros consécutifs.

13) Dispositif selon la revendication 12, caractérisé en ce que ledit réseau de radiocommunication fonctionne sans saut de fréquence.

14) Dispositif selon la revendication 12, caractérisé en ce que ledit réseau de radiocommunication fonctionne avec une synchronisation horaire et avec un saut de fréquence cyclique.

15) Dispositif selon la revendication 1 caractérisé en ce que, ledit réseau de radiocommunication fonctionnant selon l'accès multiple par répartition dans le temps, il comprend des moyens pour ordonner lesdites ressources identifiées selon une numérotation à prépondérance temporelle, lesdites classes comprenant des ressources de numéros consécutifs.

**16)** Dispositif selon la revendication 15, caractérisé en ce que ledit réseau de radiocommunication fonctionne avec un saut de fréquence pseudo-aléatoire.

**17)** Dispositif selon la revendication 15, caractérisé en ce que ledit réseau de radiocommunication fonctionne sans synchronisation horaire et avec un saut de fréquence cyclique.

**18)** Dispositif selon la revendication 1 caractérisé en ce que,

- lesdites cellules voisines (A2, ..., A7) étant au nombre de n-1,
- lesdites ressources étant formées à partir de fréquences porteuses (F1, F2, F3) en nombre f identifiées chacune par son rang j dans l'ensemble des fréquences porteuses,
- chacune desdites fréquences porteuses étant formée de trames comportant des intervalles de temps (IT1, ..., IT8) en nombre p identifiés chacun par son rang i dans une trame,
- un secteur de temps (TS1, ..., TS24) qui correspond au iième intervalle de temps de la jième fréquence porteuse étant alors identifié par son rang qui vaut $(j-1).p + i$,
- chacune desdites classes étant affectée d'un numéro distinct c compris entre 1 et n,
- un facteur de répétition R valant la partie entière du nombre desdites secteurs de temps divisé par le nombre desdites cellules : $R = E(f.p/n)$,

  si le numéro c (1) d'une desdites classes est inférieur ou égal à f.p, il attribue à cette classe les secteurs de temps (TS1, TS8, TS15, TS22) dont le rang vaut $c + k.n$ où k est un nombre entier compris entre 0 et R sous réserve que ledit rang soit inférieur ou égal à f.p.

**19)** Dispositif selon l'une quelconque des revendications 12 à 18 caractérisé en ce que, lesdites classes de priorité d'une cellule étant épuisées, il attribue pour un canal de cette cellule un intervalle de temps de rang i de sorte que, dans cette cellule, le nombre total des intervalles de temps de rang i attribués n'excède pas de plus d'une unité le nombre total des intervalles de temps de rang i' déjà attribués, quel que soit i' différent de i.

**20)** Dispositif selon l'une quelconque des revendications 1 à 11 caractérisé en ce que, ledit réseau de radiocommunication fonctionnant selon l'accès multiple par répartition dans les fréquences, lesdites ressources identifiées sont des fréquences distinctes.

**21)** Dispositif selon l'une quelconque des revendications 1 à 11 caractérisé en ce que, ledit réseau de radiocommunication fonctionnant selon l'accès multiple par répartition dans les codes, lesdites ressources identifiées sont des codes distincts.

# FIG.1

# FIG.2

| F1 | TS1 | TS2 | TS3 | TS4 | TS5 | TS6 | TS7 | TS8 |
|----|-----|-----|-----|-----|-----|-----|-----|-----|
|    | IT1 | IT2 | IT3 | IT4 | IT5 | IT6 | IT7 | IT8 |

| F2 | TS9 | TS10 | TS11 | TS12 | TS13 | TS14 | TS15 | TS16 |
|----|-----|------|------|------|------|------|------|------|
|    | IT1 | IT2  | IT3  | IT4  | IT5  | IT6  | IT7  | IT8  |

| F3 | TS17 | TS18 | TS19 | TS20 | TS21 | TS22 | TS23 | TS24 |
|----|------|------|------|------|------|------|------|------|
|    | IT1  | IT2  | IT3  | IT4  | IT5  | IT6  | IT7  | IT8  |

# FIG. 3

| ID / L | 1 | 2 | 3 | 4 | 5 | 6 | 7 |
|---|---|---|---|---|---|---|---|
| 1 | 1 | 4 | 7 | 11 | 14 | 18 | 21 |
| 2 | 2 | 5 | 8 | 12 | 15 | 19 | 22 |
| 3 | 3 | 6 | 9 | 13 | 16 | 20 | 23 |
| 4 | 6 | 10 | 10 | 17 | 17 | 24 | 24 |
| 5 | 5 | 9 | 13 | 16 | 20 | 23 | 3 |
| 6 | 4 | 8 | 12 | 15 | 19 | 22 | 2 |
| 7 | 7 | 7 | 11 | 14 | 18 | 21 | 1 |
| 8 | 8 | 11 | 14 | 18 | 21 | 1 | 4 |
| 9 | 9 | 12 | 15 | 19 | 22 | 2 | 5 |
| 10 | 10 | 13 | 16 | 20 | 23 | 3 | 6 |
| 11 | 13 | 17 | 17 | 24 | 24 | 6 | 10 |
| 12 | 12 | 16 | 20 | 23 | 3 | 5 | 9 |
| 13 | 11 | 15 | 19 | 22 | 2 | 4 | 8 |
| 14 | 14 | 14 | 18 | 21 | 1 | 7 | 7 |
| 15 | 15 | 18 | 21 | 1 | 4 | 8 | 11 |
| 16 | 16 | 19 | 22 | 2 | 5 | 9 | 12 |
| 17 | 17 | 20 | 23 | 3 | 6 | 10 | 13 |
| 18 | 20 | 24 | 24 | 6 | 10 | 13 | 17 |
| 19 | 19 | 23 | 3 | 5 | 9 | 12 | 16 |
| 20 | 18 | 22 | 2 | 4 | 8 | 11 | 15 |
| 21 | 21 | 21 | 1 | 7 | 7 | 14 | 14 |
| 22 | 22 | 1 | 4 | 8 | 11 | 15 | 18 |
| 23 | 23 | 2 | 5 | 9 | 12 | 16 | 19 |
| 24 | 24 | 3 | 6 | 10 | 13 | 17 | 20 |

# FIG. 4

| L \ ID | 1 | 2 | 3 | 4 | 5 | 6 | 7 |
|---|---|---|---|---|---|---|---|
| 1 | 1 | 2 | 3 | 12 | 13 | 22 | 23 |
| 2 | 9 | 10 | 11 | 20 | 21 | 7 | 8 |
| 3 | 17 | 18 | 19 | 5 | 6 | 15 | 16 |
| 4 | 18 | 4 | 4 | 14 | 14 | 24 | 24 |
| 5 | 10 | 19 | 5 | 6 | 15 | 16 | 17 |
| 6 | 2 | 11 | 20 | 21 | 7 | 8 | 9 |
| 7 | 3 | 3 | 12 | 13 | 22 | 23 | 1 |
| 8 | 11 | 12 | 13 | 22 | 23 | 1 | 2 |
| 9 | 19 | 20 | 21 | 7 | 8 | 9 | 10 |
| 10 | 4 | 5 | 6 | 15 | 16 | 17 | 18 |
| 11 | 5 | 14 | 14 | 24 | 24 | 18 | 4 |
| 12 | 20 | 6 | 15 | 16 | 17 | 10 | 19 |
| 13 | 12 | 21 | 7 | 8 | 9 | 2 | 11 |
| 14 | 13 | 13 | 22 | 23 | 1 | 3 | 3 |
| 15 | 21 | 22 | 23 | 1 | 2 | 11 | 12 |
| 16 | 6 | 7 | 8 | 9 | 10 | 19 | 20 |
| 17 | 14 | 15 | 16 | 17 | 18 | 4 | 5 |
| 18 | 15 | 24 | 24 | 18 | 4 | 5 | 14 |
| 19 | 7 | 16 | 17 | 10 | 19 | 20 | 6 |
| 20 | 22 | 8 | 9 | 2 | 11 | 12 | 21 |
| 21 | 23 | 23 | 11 | 3 | 3 | 13 | 13 |
| 22 | 8 | 11 | 2 | 11 | 12 | 21 | 22 |
| 23 | 16 | 9 | 10 | 19 | 20 | 6 | 7 |
| 24 | 24 | 17 | 18 | 4 | 5 | 14 | 15 |

Office européen
des brevets

**RAPPORT DE RECHERCHE EUROPEENNE**

Numero de la demande

EP 94 40 3032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB-A-2 266 433 (TELEFONAKTIEBOLAGET L M ERICSSON) 27 Octobre 1993 <br> * page 8, ligne 31 - page 9, ligne 29 * <br> * page 10, ligne 24 - page 11, ligne 9 * <br> * page 20, ligne 1 - page 21, ligne 35 * <br> --- | 1 | H04Q7/36 |
| A | EP-A-0 329 997 (MOTOROLA) 30 Août 1989 <br> * colonne 5, ligne 37 - ligne 44 * <br> * colonne 7, ligne 53 - colonne 8, ligne 11 * <br> ----- | 1 | |

| | | | DOMAINES TECHNIQUES RECHERCHES (Int.Cl.6) |
|---|---|---|---|
| | | | H04Q <br> H04B |

Le présent rapport a été établi pour toutes les revendications

| Lieu de la recherche | Date d'achèvement de la recherche | Examinateur |
|---|---|---|
| LA HAYE | 5 Avril 1995 | Gerling, J.C.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)